(19) Europäisches Patentamt / European Patent Office / Office européen des brevets

(11) EP 2 392 003 B1

(12) **EUROPEAN PATENT SPECIFICATION**

(45) Date of publication and mention of the grant of the patent:
**02.01.2013 Bulletin 2013/01**

(21) Application number: **09778994.5**

(22) Date of filing: **30.01.2009**

(51) Int Cl.:
*G10L 19/00* (2013.01)     *H04M 3/22* (2006.01)

(86) International application number:
**PCT/EP2009/051054**

(87) International publication number:
**WO 2010/086020 (05.08.2010 Gazette 2010/31)**

(54) **AUDIO SIGNAL QUALITY PREDICTION**

TONSIGNALQUALITÄTSVORHERSAGE

PRÉDICTION DE QUALITÉ DE SIGNAL AUDIO

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**07.12.2011 Bulletin 2011/49**

(73) Proprietor: **Telefonaktiebolaget LM Ericsson (publ)**
**164 83 Stockholm (SE)**

(72) Inventor: **GRANCHAROV, Volodya**
**S-171 67 Solna (SE)**

(74) Representative: **Egrelius, Fredrik**
**Ericsson AB**
**Patent Unit Kista Device, Service & Media**
**Torshamnsgatan 21-23**
**164 80 Stockholm (SE)**

(56) References cited:
**WO-A1-00/22803**

• **BEERENDS J G ET AL: "PERCEPTUAL EVALUATION OF SPEECH QUALITY (PESQ) THE NEW ITU STANDARD FOR END-TO-END SPEECH QUALITY ASSESSMENT PART II-PSYCHOACOUSTIC MODEL" JOURNAL OF THE AUDIO ENGINEERING SOCIETY, AUDIO ENGINEERING SOCIETY, NEW YORK, NY, US, vol. 50, no. 10, 1 October 2002 (2002-10-01), pages 765-778, XP001245918 ISSN: 1549-4950**
• **RIX A W ET AL: "Perceptual evaluation of speech quality (PESQ)-a new method for speech quality assessment of telephone networks and codecs" 2001 IEEE INTERNATIONAL CONFERENCE ON ACOUSTICS, SPEECH, AND SIGNAL PROCESSING. PROCEEDINGS. (ICASSP). SALT LAKE CITY, UT, MAY 7 - 11, 2001; [IEEE INTERNATIONAL CONFERENCE ON ACOUSTICS, SPEECH, AND SIGNAL PROCESSING (ICASSP)], NEW YORK, NY : IEEE, US, vol. 2, 7 May 2001 (2001-05-07), pages 749-752, XP010803764**
• **RIX A W ET AL: "PERCEPTUAL EVALUATION OF SPEECH QUALITY (PESQ) THE NEW ITU STANDARD FOR END-TO-END SPEECH QUALITY ASSESSMENT PART 1-TIME-DELAY COMPENSATION" JOURNAL OF THE AUDIO ENGINEERING SOCIETY, AUDIO ENGINEERING SOCIETY, NEW YORK, NY, US, vol. 50, no. 10, 1 October 2002 (2002-10-01), pages 755-764, XP001245917 ISSN: 1549-4950**

**Description**

TECHNICAL FIELD

The present invention relates to a method and an apparatus for predicting the quality of an audio signal after transmission through a communication system, using a reference signal corresponding to an input signal to the communication system, and a processed signal corresponding to an output signal from said communication system.

BACKGROUND

In a mobile communication system, as well as in e.g. a VoIP system, it is important to be able to predict the quality of a speech signal after the speech signal has passed through the system. The objective quality of an audio/speech signal after transmission through a system can be predicted e.g. by using the PESQ (Perceptual Evaluation of Speech Quality) or the PEAQ (Perceptual Evaluation of Audio Quality), which both are examples of a conventional intrusive, i.e. double-ended, methods for audio quality prediction. An intrusive method uses both the original signal input to a system and the distorted output signal, which are forwarded to an audio signal quality predicting apparatus. An intrusive audio signal quality predicting apparatus predicts the quality of an audio signal after transmission through a network by comparing a reference signal input to the system with the processed (distorted) signal output, and it is effective across a range of networks, including PSTN, mobile, and VoIP. The PESQ takes into account e.g. coding distortions, errors, packet loss, delay, variable delay and filtering, and measures the effects of distortions such as noise, delay, and front-end clipping, in order to provide a single Mean Opinion Score (MOS) as a quality measure. Thus, a reference signal, i.e. an input signal to an audio transmission system, and a processed signal, i.e. a distorted output of the system, may be used for predicting the quality of an audio signal transmitted through said system.

In order to perform an intrusive, double-ended, audio signal quality prediction, the terminal arranged to perform the prediction is normally connected to two different points of the system, one point for insertion of the reference signal and one for receiving the processed signal. A possible connection point is e.g. a mobile phone, a Media Gateway, or a VoIP Gateway.

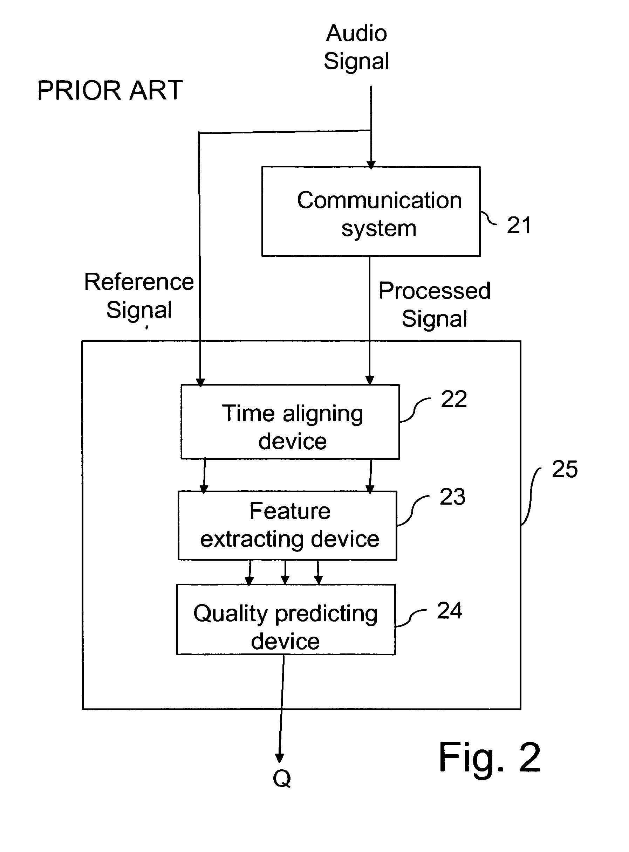

Figure 2 is a block diagram illustrating a conventional apparatus 25 for estimation the quality of an audio signal as disclosed in "Perceptual Evalution of Speech Quality (PESQ) The New ITV Standard for End-to-End Speech quality assessment Part II, Beerends J.G et AI., JAES, October 2002, , e.g. a speech signal, after transmission through a communication system 21, from a reference signal and a processed signal. A synchronization in time of the reference signal and the processed signal is performed by a time aligning device 22, an extraction of the features in the signals related to quality variations is performed by a feature extracting device 23, and a quality estimation is produced by combining the extracted features in the quality predicting device 24.

The synchronization in time, i.e. the time-alignment, between the reference signal and the processed signal in the time aligning device 22 in figure 2 is required due to the fact that a delay is typically introduced in the processed signal, e.g. by a VoIP system, by a low-bitrate parametric coder, not synchronized clocks, and by changes in the sampling rate. Even though the human perception of the audio quality normally is unaffected by small delays, the signals have to be synchronized before the extraction of the features, in order to obtain an objective estimation of the audio signal quality.

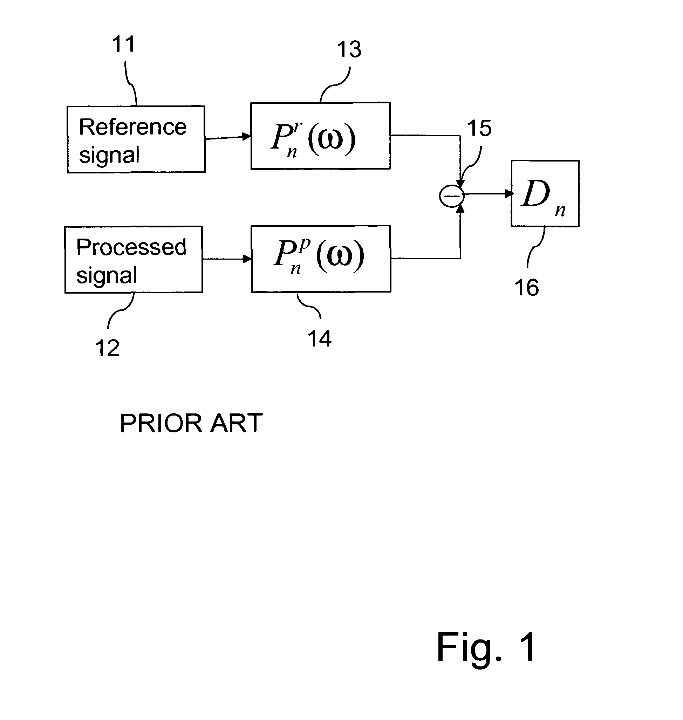

The feature extracting device 23 in figure 2 performs an extraction of the features in both signals, and figure 1 illustrates a conventional feature extraction scheme from a reference signal 11 and a processed signal 12. Vectors with spectral information are extracted from both signals on block basis, and the distance between the vectors is a measure of the local distortion. In the feature extraction, a sequence of typically 8-12 sec from the reference signal and of the processed signal is segmented into short blocks, each block having a length of typically 20-40ms. The waveform of each signal block is transformed to the frequency domain, and the frequency domain blocks are, in turn, transformed to the power spectrum. Further, the frequency domain vector may be converted to the perceptual domain, through frequency warping of the Herzscale to Bark or Mel scales, followed by a compression to obtain loudness density. Thereafter, the local distortion $D_n$ 16, at a block with index n, is calculated in 15 as the distance between the frequency representation 13 of the reference signal and the frequency representation 14 of the processed signal, related to e.g. the excitation pattern and the loudness density, the calculation described e.g. according to equation (1) below:

$$D_n = f(P_n^r(\omega) - P_n^p(\omega)) \qquad (1)$$

Hereinafter, the index r indicates a reference signal, the index p indicates the processed signal, and the index n indicates a particular block.

The function *f* in equation (1) performs and aggregation over the frequency bins *w*, and calculates a vector distance, which may include an *Lp* norm and/or sign difference.

In the quality predicting device 24 in figure 2, a signal quality value, Q, is determined from a calculated aggregation, e.g. by an $L_p$ norm, of the per-block distortions, $D_n$, according to equation (2) below:

$$D = \left( \frac{1}{N} \sum_{n=1}^{N} D_n^p \right)^{1/p} \qquad (2)$$

Since a lower distortion leads to a higher quality, the audio signal quality value indicated by the quality value, Q, is inversely proportional to the aggregated distortion, D.

However, the above-described conventional quality estimating device 25 has several drawbacks. One drawback is that it is very sensitive to errors in the time-alignment between the reference signal and the processed signal, and the calculated difference between the two power spectrum vectors, as illustrated in Fig. 1, will have a large error if the spectrum vectors are not perfectly synchronized in time. Since the processed signal could be heavily distorted due to e.g. a low bitrate codec, en error in the time-alignment presents a problem in objective audio signal quality estimation using a reference and a processes signal.

Further, even though the human auditory system compensates for moderate differences in pitch and timbre, the subtraction of the two spectrum vectors is not able to capture these natural speech variations. An additional drawback is that since the speech signal is a quasi-stationary, the spectral characteristics can be extracted only on short-time basis, e.g. up to 40 ms. However, it may be desirable to calculate the distortion with a different resolution, using larger signal segment, e.g. with a length of 300 ms, which is not possible using this conventional quality estimation device.

SUMMARY

The object of the present invention is to address the problem outlined above, and this object and others are achieved by the method and the arrangement according to the appended independent claims 1 and 11, and by the embodiments according to the dependent 1 and 11 claims.

According to one aspect, the invention provides a method for predicting the quality of an audio signal after transmission through a communication system. The method uses a reference signal corresponding to an input signal to the communication system, and a processed signal corresponding to an output signal from said communication system. The method comprises the steps of:

- Segmenting the reference signal and the processed signal into at least two first blocks having a pre-determined length;
- Calculating a number of different spectral parameters representing spectral properties of the signal for each of said first blocks, the number of spectral parameters being at least two;
- For each of the first blocks, calculating a distortion between each calculated spectral parameter of the reference signal and the corresponding calculated spectral parameter of the processed signal;
- Calculating an aggregated value of said distortions for a number of different time-displacements between the reference signal and the processed signal;
- Determining a first quality value of the audio signal from a minimum aggregated value of the distortions at an optimal time-displacement.

The quality indicated by the determined first quality value may be inversely proportional to the minimum aggregated value of the distortions, and the number of parameters may be equal to three.

One of said spectral parameters may represent a spectral flatness, which indicates the resonant structure of the power spectrum, one of the spectral parameters may represent the normalized transition rate of RMSE, which indicates the rate of signal energy change, and one of said spectral parameters may represent the spectral centroid, which indicates the frequency around which the signal power is concentrated.

The method may comprise the further steps of:

- Segmenting the reference signal and the processed signal into at least one second block, each second block containing a pre-determined number of said first blocks;
- For each of the second blocks, calculating a second parameter from each of the spectral parameters calculated for each of the first blocks contained in the second block, and calculating a distortion between each second parameter of the reference signal and the corresponding second parameter of the processed signal, at said optimal time displacement;

- Determining a second quality value from an aggregated value of the calculated distortions.

The second quality value may be inversely proportional to the aggregated value of the distortions.

Further, a total quality value of the audio signal may be determined by combining the first quality value with the second quality value, e.g. by an addition with different weight.

The calculation of said second parameters may comprise a determination of the means, the variance, or the skew of the spectral parameters calculated for the first blocks contained in the second blocks.

According to a second aspect, the invention provides an apparatus for predicting the quality of an audio signal transmitted through a communication system by using a reference signal corresponding to an input signal to said communication system, and a processed signal corresponding to a distorted output signal from the communication system. The apparatus comprises signal segmenting means for segmenting the reference signal and the processed signal into at least two first blocks having a pre-determined length; spectral parameter calculating means for calculating at least two spectral parameters for each of said first blocks, each spectral parameter representing a different spectral property of the signal; distortion calculating means for calculating the distortion between each spectral parameter of the reference signal and the corresponding spectral parameter of the processed signal, for each of the first blocks; aggregation calculating means for calculating an aggregated value of said calculated distortions at a number of different time-displacements between the reference signal and the processed signal, and first quality determining means for determining a first quality value of the audio signal from a minimum aggregated value of the distortions at an optimal time-displacement.

The apparatus may further comprise means for determining a second quality value, said means comprising second segmenting means for segmenting the reference signal and the processed signal into at least one second block, each second block containing a pre-determined number of said first blocks; second parameter calculating means for calculating a second parameter from each of the spectral parameters calculated for each of the first blocks contained in the second blocks; second distortion calculating means for calculating a distortion between each second parameter of the reference signal and the corresponding second parameter of the processed signal for each of the second blocks, at said optimal time-displacement; and second quality determining means for determining a second quality value from an aggregated value of the calculated distortions.

The apparatus may be arranged to be connected to two points of the communication system, one for insertion of the reference signal and one for receiving the distorted processed signal.

BRIEF DESCRIPTION OF THE DRAWINGS

The present invention will now be described in more detail, and with reference to the accompanying drawings, in which:

- Figure 1 illustrates a conventional feature extraction scheme for a reference signal and a processed signal;
- Figure 2 illustrates a conventional apparatus for predicting the quality of an audio signal;
- Figure 3 illustrates a parameter extracting scheme according to an exemplary embodiment of the present invention;
- Figure 4 illustrates audio signal quality prediction, according to the basic idea of this invention;
- Figure 5 is a flow diagram illustrating a method for predicting the quality of an audio signal, according to a first exemplary embodiment of this invention;
- Figure 6 is a flow diagram illustrating the additional steps of predicting the quality of an audio signal, according to a second exemplary embodiment of this invention;
- Figure 7 is an apparatus for predicting the quality of an audio signal, according to a first exemplary embodiment of this invention;

DETAILED DESCRIPTION

In the following description, the invention will be described in more detail with reference to certain embodiments and to accompanying drawings. For purposes of explanation and not limitation, specific details are set forth, such as particular scenarios, techniques, etc., in order to provide a thorough understanding of the present invention. However, it is apparent to one skilled in the art that the present invention may be practised in other embodiments that depart from these specific details.

Moreover, those skilled in the art will appreciate that the functions and means explained herein below may be implemented using software functioning in conjunction with a programmed microprocessor or general purpose computer, and/or using an application specific integrated circuit (ASIC). It will also be appreciated that while the current invention is primarily described in the form of methods and devices, the invention may also be embodied in a computer program product as well as in a system comprising a computer processor and a memory coupled to the processor, wherein the memory is encoded with one or more programs that may perform the functions disclosed herein.

According to the basic concept to this invention, the predicted quality of an audio signal transmitted through a system is based on the distortion between a small number of spectral parameters representing the signal spectrum of the distorted processed signal, and the same spectral parameters representing the signal spectrum of the input reference signal. Further, the time synchronization between the reference signal and the processed signal is performed jointly with the calculation of the distortion. Thereby, the quality prediction is less sensitive for synchronization errors, and the distortions can be calculated on different time scales.

More specifically, a sequence of the reference signal, i.e. a signal input to a communication system, and the processed signal, i.e. the output signal from the communication system, are each segmented into a number of small-scale first blocks having a pre-determined length, typically 20-40 msec, and the length of the signal sequences are typically 8-12 sec. Optionally, the signal waveform can be transformed into a frequency domain, and expressed as a power spectrum.

Two or more, and typically three, different spectral parameters representing different spectral properties of the signals are calculated for each block of the reference signal and of the processed signal. The number of spectral parameters should be low, and significantly lower than the number of frequency bins, but may obviously be more than three, such as e.g. four or five.

Thereafter, the distortion of the processed signal is determined by calculating the difference between each spectral parameter of each of the first blocks in the sequence of the processed signal and the same spectral parameter in the corresponding block of the reference signal. Next, a local distortion, $D_n$, is determined for each block from these differences, and the local distortions are aggregated. A smaller value of the aggregated local per-block distortion indicates that the transmission through the communication system will cause less distortion of an audio signal, i.e. a higher quality can be predicted. Accordingly, a value of the quality is determined from the aggregated local distortion, such that the quality indicated by a predicted quality value is inversely proportional to the size of the aggregated local distortion.

Further, the synchronization in time between the reference signal and the processed signal is performed jointly with the calculation of the aggregation of the distortions, by calculating each local distortion, and the aggregation of the local distortion, at a number of different time-displacements, m, between the reference signal and the processed signal. Thereby, an optimal time-displacement could be determined by selecting the minimum of the calculated aggregated local distortions, and determining the quality value from this minimum of the aggregated distortions.

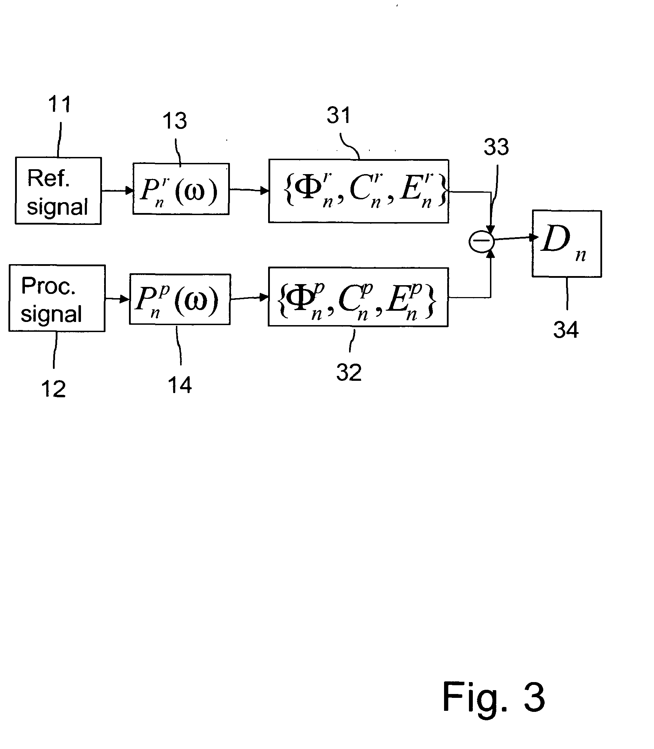

Figure 3 is a block diagram illustrating the calculation of a local distortion for a first block with index n, according to an exemplary embodiment of this invention. A sequence of the reference signal 11 and of the processed signal 12 are both segmented into a number of first blocks, and the signal waveform of first block n of the reference signal is transformed into a power spectrum 13 in the frequency domain, and the signal waveform of block n of the processed signal is transformed into a power spectrum 14 in the frequency domain. Thereafter, three spectral parameters 31 are calculated for first block n in the reference signal, and the same spectral parameters 32 are calculated for the block in the processed signal. However, according to an alternative embodiment, the spectral parameters are derived directly from the signal waveform, without transforming the signal waveform to a power spectrum. Further, the difference 33 between each of the spectral parameters is calculated, and the local distortion 34, $D_n$, is determined for block n from these differences.

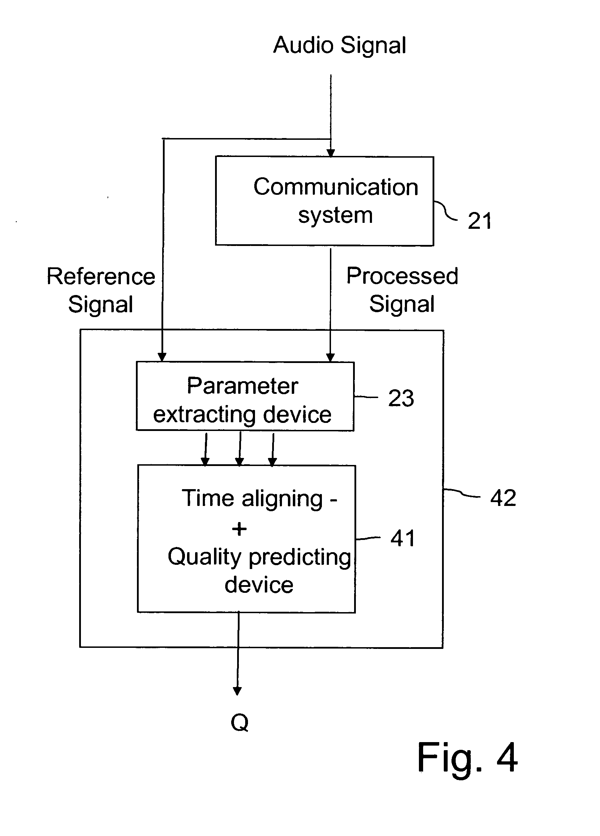

Figure 4 illustrates an audio quality predicting apparatus 42, according to the basic idea of this invention, of an audio signal transmitted through a communication system 21. A suitable low number of different spectral parameters, e.g. three spectral parameters, are calculated from the spectral properties of the blocks of the reference signal and of the processed signal by a parameter extracting device 23, and the synchronization in time and an aggregation of calculated local distortions are performed jointly in a time-aligning and quality predicting device 41, providing a value of the quality, Q, at the output.

According to this invention, every first block, having a length of e.g. 20 ms, of the reference signal and the processed signal are described with at least two, but preferably three, different spectral parameters, in contrast to a conventional frequency representation description, according to which such a block could described with e.g. 128 components. According to an exemplary embodiment of this invention, suitable spectral parameters for describing each block comprises the spectral flatness, the normalized transition rate of RMSE, and the spectral centroid.

The spectral parameter representing the spectral flatness of the block measures the amount of resonant structure in the power spectrum, e.g. according to equation (3) below, and a deviation in this parameter is related to coding distortions and an additive background noise.

$$\Phi = \frac{\exp(\frac{1}{W} \sum_{\omega=1}^{W} \log(P(\omega)))}{\frac{1}{W} \sum_{\omega=1}^{W} P(\omega)} \qquad (3)$$

The spectral parameter representing the normalized transition rate of RMSE indicates the rate of the signal energy change, e.g. according to equation (4) below, and a deviation in this parameter is related to e.g. gain errors and signal mutes.

$$E = \frac{\left| \widetilde{E}_n - \widetilde{E}_{n-1} \right|}{\widetilde{E}_n + \widetilde{E}_{n-1}} \qquad (4)$$

The spectral parameter representing the spectral centroid indicates the frequency around which most of the signal energy is concentrated, e.g. according to equation (5) below, and a deviation in this parameter is related to a loss of bandwidth and an additive background noise. Since the spectral centroid is related to the spectrum tilt, the spectral centroid can be approximated as the coefficient in the first-order linear-prediction analysis.

$$C = \frac{\sum_{\omega=1}^{W} \omega . P(\omega)}{\sum_{\omega=1}^{W} P(\omega)} \qquad (5)$$

The above-described exemplary parameters, and in particular the spectral flatness and the normalized transition rate of the RMSE, represent meaningful dimensions of a block of an audio signal, such as the resonant structure, the perceived brightness, and the energy changes, and the parametric representation is easy to associate with a particular distortion. Further, the spectral parameters are robust to errors in time-alignment and formant displacement, since they do not require that the frequency bins of the reference signal and the processed signal are perfectly positioned.

The local distortion, $D_n$, for a first block with index n, which is calculated from the differences between each spectral parameters of the block in the processed signal and the spectral parameters in the corresponding block in the reference signal, can be expressed e.g. according to the equation (6) below:

$$D_n = g(\Phi_n^r - \Phi_n^p, C_n^r - C_n^p, E_n^r - E_n^p) \qquad (6)$$

According to a first embodiment of this invention, the synchronization in time of the processed signal and the reference signal is performed jointly with the calculation of the aggregation of the local distortions, $D_n$, by calculating each local distortion, as well as the aggregation of the local distortion, at a number of different time-displacements, m, between the reference signal and the processed signal. Thereby, an optimal time-displacement can be determined by selecting the minimum of the calculated aggregated local distortions, and determining the quality value from this minimum of the distortions.

The calculation of the local distortion for first block n, at time displacement m can be expressed e.g. by the equation (7) below:

$$D_{n,m} = g(\Phi_n^r - \Phi_{n+m}^p, C_n^r - C_{n+m}^p, E_n^r - E_{n+m}^p) \quad (7)$$

Thereafter, the local distortions are aggregated at different m, e.g. as an $L_p$ norm according to equation (8):

$$D = \left( (\tfrac{1}{N} \sum_{n=1}^{N} D_{n,m}^p)^{1/p} \right) \quad (8)$$

The quality is predicted from the minimum aggregated value of the local distortions, at an optimal time-displacement, at which the processed signal is time-aligned with the reference signal. According to an embodiment of this invention, the predicted quality is indicated by a selected suitable quality value. The quality indicated by the quality value is inversely proportional to the aggregated local distortions, since a comparatively small distortion of the audio signal means that the predicted quality of the audio signal is comparatively high.

The optimal time displacement $m^*$ can be calculated e.g. according to equation (9):

$$m^* = \arg \min_m \left( (\tfrac{1}{N} \sum_{n=1}^{N} D_{n,m}^p)^{1/p} \right) \quad (9)$$

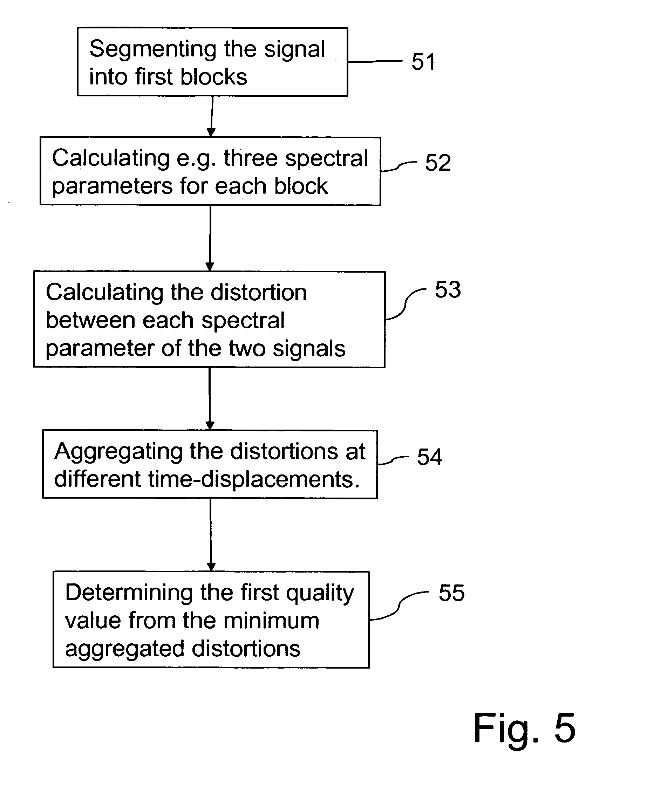

Figure 5 is a flow diagram illustrating a method for predicting the quality of an audio signal, according to a first exemplary embodiment of this invention. In step 51, the reference signal and the processed signal are segmented into a number of first blocks having a length of e.g. 20-40 ms, and in step 52, e.g. three different spectral parameters are calculated for each of the first blocks in the processed signal and in the reference signal. The spectral parameters are at least two, and suitable spectral parameters are e.g. the spectral flatness, the spectral centroid and the normalized transitions rate of RMSE, as described above. In step 53, the local distortion, $D_n$, is calculated for each of the first blocks from the difference between each spectral parameter in the block of the processed output signal and in the corresponding block of the input reference signal, in order to determine the distortion of the audio signal during the transmission through the communication system. Next, in step 54, the processed signal is synchronized in time with the reference signal by a calculation of an aggregated value, e.g. as an $L_p$ norm, of the local distortions in each block at different time-displacements, m, between the processed signal and the reference signal. The predicted first quality value is determined, in step 55, from the minimum of the aggregated local distortions, at the optimal time-displacement, * $m^*$, between the processed signal and the reference signal.

In the prediction of the first quality value, as illustrated in figure 5, the spectral parameters and the local distortion are calculated for fixed small-scale blocks, e.g. with a length of 20 ms. However, according to a second embodiment of this invention, the distortions can be obtained at a larger scale, as well, through calculating second parameters as statistic values from the calculated spectral parameters of the first blocks located within a larger-scale second block.

Thus, according to a second embodiment of this invention, said second parameters are obtained by calculating e.g. the mean, the variance, the skew, or a certain quintile of from the spectral parameters calculated for the first blocks located within the larger-scale second block. Thereby, the second parameters indicated in equation (10), (11) and (12) below are obtained for the larger-scale second block with index B of the reference signal, the larger-scale second block containing a pre-determined number of small-scale first blocks:

$$\{\Phi_{n-B}^{r}, \Lambda, \Phi_{n+B}^{r}\} \rightarrow \Phi_{B}^{r} \tag{10}$$

$$\{C_{n-B}^{r}, \Lambda, C_{n+B}^{r}\} \rightarrow C_{B}^{r} \tag{11}$$

$$\{E_{n-B}^{r}, \Lambda, E_{n+B}^{r}\} \rightarrow E_{B}^{r} \tag{12}$$

Obviously, the corresponding second parameters are also obtained for the processed signal. The local distortion, $D_B$, for this large-scale second block B is calculated from the difference between the second parameters in this larger-scale second block in the processed signal and the corresponding larger-scale second block in the reference signal, e.g. according to the equation (13) below:

$$D_{B} = g(\Phi_{B}^{r} - \Phi_{B}^{p}, C_{B}^{r} - C_{B}^{p}, E_{B}^{r} - E_{B}^{p}) \tag{13}$$

According to a further embodiment of this invention, the total quality of an audio signal sequence having a length of e.g. between 8 and 12 seconds is predicted from the combination of $D_n$ and $D_B$ distortions. $D_n$ always describes the local distortion in the small-scale first blocks, which have as fixed length. However, a larger-scale second block, indicated by index B, has a length corresponding to at least two of the first blocks, i.e. a length between two small-scale blocks and the total length of the signal sequence.

The total quality is predicted as a linear combination between quality predictions determined from the distortions with different resolution, i.e. the small-scale local distortions and the larger-scale distortions are aggregated independently. Accordingly, a first quality value, $Q_1$ is determined from an aggregation of the small-scale local distortions, $D_n$, and a second quality value, $Q_2$, is determined from an aggregation of the large-scale distortions, $D_B$. Thereafter, the first quality value $Q_1$ and the second quality value $Q_2$ are combined to form the total quality value $Q_{tot}$, e.g. according to equation (14) below:

$$Q_{tot} = k_1 Q_1 + k_2 Q_2 \tag{14}$$

If $k_1 = k_2$ in equation (14), the first quality value and the second quality value are added with the same weight. However, according to a further embodiment, the first quality value and the second quality value are added with different weight, and the different weights are indicated by $k_1 \neq k_2$ in (14) above. For example, the second quality value predicted from larger-scale blocks with index B could be given a higher weight in the predicted total quality value when a specific distortion is detected, since some distortion are more easily describes with larger-scale parameters, such as e.g. additive background noise, bandwidth limitations and the energy loss in larger signal segments. Therefore, it may be advantageous to give the second large-scale quality value a higher weight in the total quality value, and in this case $k_1 < k_2$ in equation

(14) above.

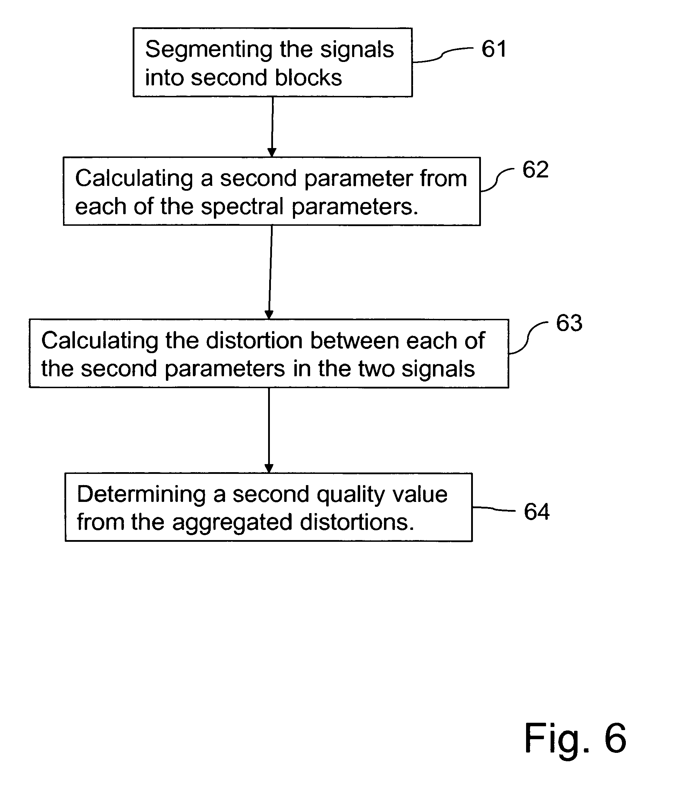

Figure 6 is a flow diagram illustrating the additional steps of predicting a second, larger-scale quality of an audio signal, according to a second exemplary embodiment of this invention, which is performed after the steps illustrated in figure 5. In step 61, the sequence of the processed signal and of the reference signal are segmented into one or more second blocks, of which each of the second blocks contains two or more of the small-scale first blocks. In step 62, a second parameter is calculated statistically from each of the spectral parameters of the first blocks contained in the larger-scale second block in the processed signal and in the reference signal, at the optimal time displacement $m^*$ , and the second parameters are calculated e.g. as the mean, variance or medium value of the first parameters. Thereafter, in step 63, the difference is calculated between each second parameter of the block in the processed signal distortion and the same second parameter in the corresponding block of the reference signal, and a local distortion, $D_B$, is calculated for each of the second blocks, e.g. according to equation (13) above. Next, in step 64, a second larger-scale quality value, $Q_2$, is predicted from the aggregated local distortion, and the quality indicated by the selected second quality value is inversely proportional to the aggregated local distortions D.

According to this invention, the spectral features can be extracted from the reference signal and from the processed signals without performing any synchronization. Instead, the synchronization can be performed jointly with the determination of the aggregated distortions. Thereby, the invention achieves a low-complexity perceptual time-alignment, which is superior to conventional waveform synchronization, as well as enabling a prediction of the distortion at different time resolution, i.e. different scales, thus improving the accuracy and flexibility of the quality prediction.

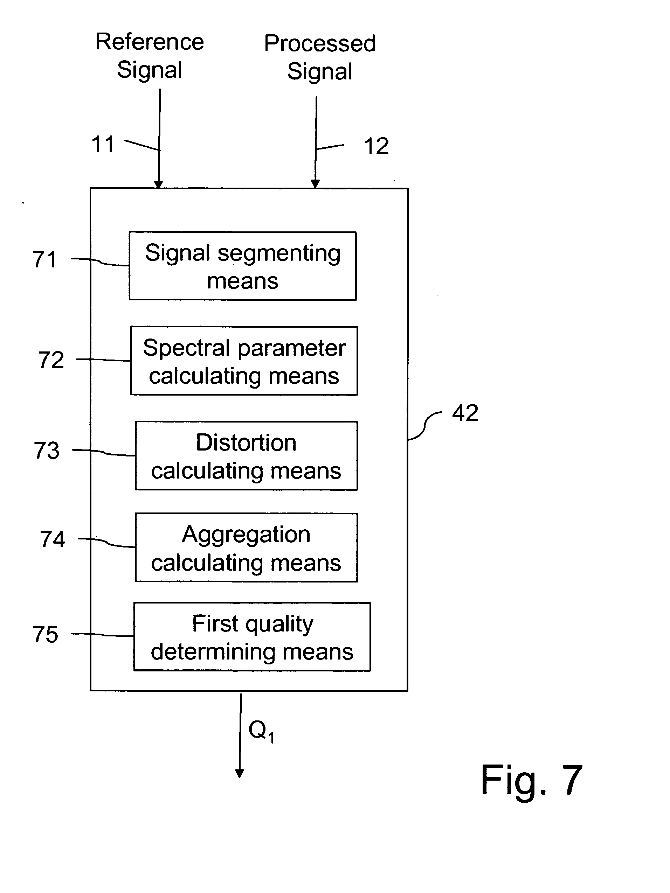

Figure 7 is an apparatus 42 for predicting the quality of an audio signal, according to a first exemplary embodiment. The apparatus comprises signal segmenting means 71 for segmenting a sequence of the reference signal and of the processed signal into a number of first blocks having a length of 20-40 ms. Further, the apparatus comprises spectral parameter calculating means 72 for calculating e.g. three different spectral parameter for each of the first blocks, each spectral parameter representing a different spectral property of the block. The difference between each spectral parameter in each block of the processed signal and the spectral parameter in the corresponding block of the reference signal is calculated by the distortion calculating means, 73, and a local distortion $D_n$ is calculated for each of the first blocks, based on these differences. The local distortions in the blocks of the sequences are aggregated by the aggregation calculating means, 74, e.g. as an $L_p$-norm, and a first quality value is predicted by the first quality predicting means, 75, such that the quality indicated by the first quality value is inversely proportional to the aggregated local distortions.

It should be noted that the means illustrated in figure 7 may be implemented by physical or logical entities using software functioning in conjunction with a programmed microprocessor or general purpose computer, and/or using an application specific integrated circuit (ASIC).

According to a second exemplary embodiment, the apparatus is further provided with means for determining a second quality value, which is calculated at a larger scale. These means comprises the following:

- Second segmenting means for segmenting the reference signal and the processed signal into one or more second blocks, each second block being larger than said first blocks, and each second block containing a pre-determined number, i.e. two or more, of the first blocks;
- Second parameter calculating means for calculating a second parameter from each of the spectral parameters calculated for each of the first small-scale blocks contained in a second, larger-scale block;
- Second distortion calculating means for calculating a distortion between each second parameter of the reference signal and the corresponding second parameter of the processed signal, at the optimal time-displacement $m^*$ between the processed signal and the reference signal, and determining a local distortion for each second block;
- Second quality determining means for determining a second quality value from an aggregated value of the calculated local distortions.

According to a further exemplary embodiment, the apparatus comprises means for determining a total quality of the audio signal, by combining the first quality value with the second quality value, e.g. with different weight.

According to a still further embodiment, the apparatus is arranged to be connected to two different points of the communication system, one for insertion of the reference signal and one for receiving the distorted processed signal. A possible connection point is e.g. a mobile phone, a Media Gateway, or a VoIP Gateway.

Further, the above mentioned and described embodiments are only given as examples and should not be limiting to the present invention. Other solutions, uses, objectives, and functions within the scope of the invention as claimed in the accompanying patent claims should be apparent for the person skilled in the art.

ABBREVIATIONS

RMSE - Root Mean Squared Error

VoIP - Voice Over Internet Protocol

$n$ - block index for the first blocks, i.e. the 20 - 40 ms small-scale blocks

B - block index for the second larger-scale blocks, each containing two or more of the first smaller-scale blocks

N - the number of blocks in the signal sequence $w$ - frequency bin index, inside one block

$r$ - parameter associated with the reference signal

$p$ - parameter associated with the processed signal

**Claims**

1. A method of predicting the quality of an audio signal after transmission through a communication system, the method using a reference signal corresponding to an input signal to the communication system, and a processed signal corresponding to an output signal from said communication system, **characterized by** the following steps: For a number of different time-displacements between the reference signal and the processed signal

 - Segmenting (51) the reference signal and the processed signal into at least two first blocks having a pre-determined length;
 - Calculating (52) a number of different spectral parameters representing spectral properties of the signal for each of said first blocks, the number of spectral parameters being at least two;
 - For each of said first blocks, calculating (53) a distortion between each calculated spectral parameter of the reference signal and the corresponding calculated spectral parameter of the processed signal;
 - Calculating (54) an aggregated value of said distortions;
 Determining (55) a first quality value of the audio signal from a minimum aggregated value of the distortions.

2. A method according to claim 1, wherein the quality indicated by the determined first quality value is inversely proportional to the minimum aggregated value of the distortions.

3. A method according to any of the preceding claims, wherein one of said spectral parameters represents a spectral flatness, which indicates the resonant structure of the power spectrum.

4. A method according to any of the preceding claims, wherein one of said spectral parameters represents the normalized transition rate of RMSE, which indicates the rate of signal energy change.

5. A method according to any of the preceding claims, wherein one of said spectral parameters represents the spectral centroid, which indicates the frequency around which the signal power is concentrated.

6. A method according to any of the preceding claims, the method comprising the further steps of:

 - Segmenting (61) the reference signal and the processed signal into at least one second block, each second block containing a pre-determined number of the first blocks;
 - For each of the second blocks, calculating (62) a second parameter from each of the spectral parameters calculated for each of the first blocks contained in the second block, and calculating (63) a distortion between each second parameter of the reference signal and the corresponding second parameter of the processed signal, at said optimal time displacement;
 - Determining (64) a second quality value from an aggregated value of the calculated distortions.

7. A method according to claim 6, wherein a determined second quality value is inversely proportional to the aggregated value of the distortions.

8. A method according to claim 6 or 7 , comprising the further step of determining a total quality value of the audio signal by combining a determined first quality value with a determined second quality value.

9. A method according to claim 8, wherein the values of the first quality and the second quality are combined by addition with different weight.

10. A method according to any of the claims 6 - 9, wherein the calculation of said second parameters comprises determining the means, the variance, or the skew of the spectral parameters calculated for the first blocks contained in the second blocks.

11. An apparatus (42) for predicting the quality of an audio signal transmitted through a communication system by using a reference signal (11) corresponding to an input signal to said communication system, and a processed signal (12) corresponding to a distorted output signal from the communication system, the apparatus **characterized in that** it comprise:
At a number of different time-displacements between the reference signal and the processed signal;

- Signal segmenting means (71) for segmenting the reference signal and the processed signal into at least two first blocks having a pre-determined length;
- Parameter calculating means (72) for calculating at least two spectral parameters for each of the first blocks, each spectral parameter representing a different spectral property of the signal;
- Distortion calculating means (73) for calculating the distortion between each spectral parameter of the reference signal and the corresponding spectral parameter of the processed signal, for each of the first blocks;
- Aggregation calculating means (74) for calculating an aggregated value of said calculated distortions;
First quality determining means (75) for determining a first quality value of the audio signal from a minimum aggregated value of the distortions.

12. An apparatus according to claim 11, wherein the quality indicated by the determined first quality value is inversely proportional to said minimum aggregated value of the distortions.

13. An apparatus according to any of the claims 11 or 12, further comprising means for determining a second quality value, the means **characterized by**:

- Second segmenting means for segmenting the reference signal (11) and the processed signal (12) into at least one second block, each second block containing a pre-determined number of the first blocks;
- Second parameter calculating means for calculating a second parameter from each of the spectral parameters calculated for each of the first blocks contained in the second blocks;
- Second distortion calculating means for calculating a distortion between each second parameter of the reference signal and the corresponding second parameter of the processed signal for each block, at said optimal time-displacement;
- Second quality determining means for determining a second quality value from an aggregated value of the calculated distortions.

14. An apparatus according to claim 13, wherein a determined second quality value is inversely proportional the aggregated value of the distortions.

15. An apparatus according to claim 13 or 14, further comprising quality determining means for determining a total quality of the audio signal by combining the first quality value with the second quality value.

16. An apparatus according to any of the claims 13 - 15, wherein the calculation of the second parameters comprises determining the means, the variance, or the skew of the spectral parameters calculated for the first blocks contained in a second block.

17. An apparatus according to any of the claims 11 - 16, wherein the apparatus is arranged to be connected to two points of the communication system, one for insertion of the reference signal and one for receiving the distorted processed signal.

**Patentansprüche**

1. Verfahren zum Vorhersagen der Qualität eines Audiosignals nach Übertragung durch ein Kommunikationssystem, wobei das Verfahren ein Referenzsignal verwendet, das einem Eingangssignal an das Kommunikationssystem entspricht, und ein verarbeitetes Signal, das einem Ausgangssignal vom Kommunikationssystem entspricht, **gekennzeichnet durch** die folgenden Schritte:

für eine Anzahl von verschiedenen Zeitverschiebungen zwischen dem Referenzsignal und dem verarbeiteten Signal:

- Segmentieren (51) des Referenzsignals und des verarbeiteten Signals in mindestens zwei erste Blöcke mit einer vorgegebenen Länge;
- Berechnen (52) einer Anzahl von verschiedenen Spektralparametern, die Spektraleigenschaften des Signals für jeden der erste Blöcke repräsentieren, wobei die Anzahl von Spektralparametern mindestens gleich zwei ist;
- für jeden der ersten Blöcke eine Verzerrung zwischen jedem berechneten Spektralparameter des Referenzsignals und dem entsprechenden berechneten Spektralparameter des verarbeiteten Signals berechnen (53);
- Berechnen (54) eines aggregierten Werts der Verzerrungen;

Bestimmen (55) eines ersten Qualitätswerts des Audiosignals aus einem aggregierten Minimalwert der Verzerrungen.

2. Verfahren nach Anspruch 1, worin die durch den bestimmten ersten Qualitätswert angezeigte Qualität umgekehrt proportional zum aggregierten Minimalwert der Verzerrungen ist.

3. Verfahren nach einem der vorhergehenden Ansprüche, worin einer der Spektralparameter eine spektrale Ebenheit repräsentiert, die die Resonanzstruktur des Leistungsspektrums anzeigt.

4. Verfahren nach einem der vorhergehenden Ansprüche, worin einer der Spektralparameter die normalisierte Übergangsrate des mittleren quadratischen Fehlers, RMSE, repräsentiert, die die Rate der Signalenergieänderung anzeigt.

5. Verfahren nach einem der vorhergehenden Ansprüche, worin einer der Spektralparameter den Spektralschwerpunkt repräsentiert, der die Frequenz anzeigt, um die die Signalleistung konzentriert ist.

6. Verfahren nach einem der vorhergehenden Ansprüche, wobei das Verfahren folgende weitere Schritte umfasst:

- Segmentieren (61) des Referenzsignals und des verarbeiteten Signals in mindestens einen zweiten Block, wobei jeder zweite Block eine vorgegebene Anzahl von ersten Blöcken enthält;
- für jeden der zweiten Blöcke einen zweiten Parameter aus jedem der Spektralparameter berechnen (62), die für jeden der im zweiten Block enthaltenen ersten Blöcke berechnet werden, und eine Verzerrung zwischen jedem zweiten Parameter des Referenzsignals und dem entsprechenden zweiten Parameter des verarbeiteten Signals an der optimalen Zeitverschiebung berechnen (63);
- Bestimmen (64) eines zweiten Qualitätswerts aus einem aggregierten Wert der berechneten Verzerrungen.

7. Verfahren nach Anspruch 6, worin ein bestimmter zweiter Qualitätswert umgekehrt proportional zum aggregierten Wert der Verzerrungen ist.

8. Verfahren nach Anspruch 6 oder 7, den weiteren Schritt umfassend, einen Gesamtqualitätswert des Audiosignals durch Kombinieren eines bestimmten ersten Qualitätswerts mit einem bestimmten zweiten Qualitätswert zu bestimmten.

9. Verfahren nach Anspruch 8, worin die Werte der ersten Qualität und der zweiten Qualität durch Addition mit verschiedenem Gewicht kombiniert werden.

10. Verfahren nach einem der Ansprüche 6 - 9, worin die Berechnung der zweiten Parameter das Bestimmen des Mittels, der Varianz oder des Skews der Spektralparameter umfasst, die für die in den zweiten Blöcken enthaltenen ersten Blöcke berechnet werden.

11. Vorrichtung (42) zum Vorhersagen der Qualität eines Audiosignals, das durch ein Kommunikationssystem übertragen wird, indem ein Referenzsignal (11) verwendet wird, das einem Eingangssignal an das Kommunikationssystem entspricht, und ein verarbeitetes Signal (12), das einem verzerrten Ausgangssignal vom Kommunikationssystem entspricht, wobei die Vorrichtung **dadurch gekennzeichnet ist, dass** sie Folgendes umfasst:

An einer Anzahl von verschiedenen Zeitverschiebungen zwischen dem Referenzsignal und dem verarbeiteten Signal

- ein Signalsegmentierungsmitt e1 (71) zum Segmentieren des Referenzsignals und des verarbeiteten Signals in mindestens zwei erste Blöcke mit einer vorgegebenen Länge;
- ein Parameterberechnungsmittel (72) zum Berechnen von mindestens zwei Spektralparametern für jeden der erste Blöcke, wobei jeder Spektralparameter eine verschiedene Spektraleigenschaft des Signals repräsentiert;
- Verzerrungsberechnungsmittel (73) zum Berechnen der Verzerrung zwischen jedem Spektralparameter des Referenzsignals und dem entsprechenden Spektralparameter des verarbeiteten Signals für jeden der ersten Blöcke;
- Aggregationsberechnungsmittel (74) zum Berechnen eines aggregierten Werts der berechneten Verzerrungen;
- ein erstes Qualitätsbestimmungsmittel (75) zum Bestimmen eines ersten Qualitätswerts des Audiosignals aus einem aggregierten Minimalwert der Verzerrungen.

12. Vorrichtung nach Anspruch 11, worin die durch den bestimmten ersten Qualitätswert angezeigte Qualität umgekehrt proportional zum aggregierten Minimalwert der Verzerrungen ist.

13. Vorrichtung nach einem der Ansprüche 11 oder 12, außerdem eine Mittel umfassend, um einen zweiten Qualitätswert zu bestimmen, wobei das Mittel **gekennzeichnet ist durch**:

- ein zweites Segmentierungsmittel zum Segmentieren des Referenzsignals (11) und des verarbeiteten Signals (12) in mindestens einen zweiten Block, wobei jeder zweite Block eine vorgegebene Anzahl der ersten Blöcke enthält;
- ein zweites Parameterberechnungsmittel zum Berechnen eines zweiten Parameters aus jedem der Spektralparameter, die für jeden der in den zweiten Blöcken enthaltenen ersten Blöcke berechnet werden;
- ein zweites Verzerrungsberechnungsmittel zum Berechnen einer Verzerrung zwischen jedem zweiten Parameter des Referenzsignals und dem entsprechenden zweiten Parameter des verarbeiteten Signals für jeden Block an der optimalen Zeitverschiebung;
- ein zweites Qualitätsbestimmungsmittel zum Bestimmen eines zweiten Qualitätswerts aus einem aggregierten Wert der berechneten Verzerrungen.

14. Vorrichtung nach Anspruch 13, worin ein bestimmter zweiter Qualitätswert umgekehrt proportional zum aggregierten Wert der Verzerrungen ist.

15. Vorrichtung nach Anspruch 13 oder 14, außerdem ein Qualitätsbestimmungsmittel umfassend, um eine Gesamtqualität des Audiosignals durch Kombinieren des ersten Qualitätswerts mit dem zweiten Qualitätswert zu bestimmen.

16. Vorrichtung nach einem der Ansprüche 13 - 15, worin die Berechnung der zweiten Parameter das Bestimmen des Mittels, der Varianz oder des Skews der Spektralparameter umfasst, die für die in einem zweiten Block enthaltenen ersten Blöcke berechnet werden.

17. Vorrichtung nach einem der Ansprüche 11 - 16, worin die Vorrichtung dazu angeordnet ist, an zwei Punkte des Kommunikationssystems angeschlossen zu werden, einen zum Anlegen des Referenzsignals und einen zum Empfangen des verzerrten verarbeiteten Signals.

**Revendications**

1. Procédé de prédiction de 1a qualité d'un signal audio après transmission à travers un système de communication, le procédé utilisant un signal de référence correspondant à un signal d'entrée au niveau du système de communication, et un signal traité correspondant à un signal de sortie à partir dudit système de communication, **caractérisé par** les étapes ci-dessous consistant à :

pour un nombre de décalages temporels distincts entre le signal de référence et le signal traité,

- segmenter (51) le signal de référence et le signal traité en au moins deux premiers blocs présentant une longueur prédéterminée ;
- calculer (52) un nombre de paramètres spectraux distincts représentant des propriétés spectrales du signal pour chacun desdits premiers blocs, le nombre de paramètres spectraux étant au moins égal à deux ;

- pour chacun desdits premiers blocs, calculer (53) une distorsion entre chaque paramètre spectral calculé du signal de référence et le paramètre spectral calculé correspondant du signal traité ;
- calculer (54) une valeur agrégée desdites distorsions ;

déterminer (55) une première valeur de qualité du signal audio à partir d'une valeur agrégée minimale des distorsions.

**2.** Procédé selon la revendication 1, dans lequel la qualité indiquée par la première valeur de qualité déterminée est inversement proportionnelle à la valeur agrégée minimale des distorsions.

**3.** Procédé selon l'une quelconque des revendications précédentes, dans lequel l'un desdits paramètres spectraux représente une planéité spectrale, laquelle indique la structure de résonance du spectre de puissance.

**4.** Procédé selon l'une quelconque des revendications précédentes, dans lequel l'un desdits paramètres spectraux représente le taux de transition normalisé d'erreur quadratique moyenne, RMSE, lequel indique le taux de modification d'énergie du signal.

**5.** Procédé selon l'une quelconque des revendications précédentes, dans lequel l'un desdits paramètres spectraux représente le centroïde spectral, lequel indique la fréquence autour de laquelle la puissance de signal est concentrée.

**6.** Procédé selon l'une quelconque des revendications précédentes, dans lequel le procédé comporte les étapes supplémentaires ci-dessous consistant à :

- segmenter (61) le signal de référence et le signal traité en au moins un second bloc, chaque second bloc contenant un nombre prédéterminé des premiers blocs ;
- pour chacun des seconds blocs, calculer (62) un second paramètre à partir de chacun des paramètres spectraux calculés pour chacun des premiers blocs contenus dans le second bloc, et calculer (63) une distorsion entre chaque second paramètre du signal de référence et le second paramètre correspondant du signal traité, audit décalage temporel optimal ;
- déterminer (64) une seconde valeur de qualité à partir d'une valeur agrégée des distorsions calculées.

**7.** Procédé selon la revendication 6, dans lequel une seconde valeur de qualité déterminée est inversement proportionnelle à la valeur agrégée des distorsions.

**8.** Procédé selon la revendication 6 ou 7, comprenant l'étape supplémentaire consistant à déterminer une valeur de qualité totale du signal audio en associant une première valeur de qualité déterminée à une seconde valeur de qualité déterminée.

**9.** Procédé selon la revendication 8, dans lequel les valeurs de la première qualité et de la seconde qualité sont associées par l'addition avec une pondération distincte.

**10.** Procédé selon l'une quelconque des revendications 6 à 9, dans lequel le calcul desdits seconds paramètres comporte la détermination de la moyenne, de la variance ou de l'asymétrie des paramètres spectraux calculés pour les premiers blocs contenus dans les seconds blocs.

**11.** Dispositif (42) de prédiction de la qualité d'un signal audio transmis à travers un système de communication, en utilisant un signal de référence (11) correspondant à un signal d'entrée au niveau dudit système de communication, et un signal traité (12) correspondant à un signal de sortie déformé en provenance dudit système de communication, le dispositif étant **caractérisé en ce qu'**il comporte :

au niveau d'un nombre de décalages temporels distincts entre le signal de référence et le signal traité,

- un moyen de segmentation de signaux (71) pour segmenter le signal de référence et le signal traité en au moins deux premiers blocs présentant une longueur prédéterminée ;
- un moyen de calcul de paramètres (72) pour calculer au moins deux paramètres spectraux pour chacun desdits premiers blocs, chaque paramètre spectral représentant une propriété spectrale distincte du signal ;
- un moyen de calcul de distorsion (73) pour calculer la distorsion entre chaque paramètre spectral du signal de référence et le paramètre spectral correspondant du signal traité, pour chacun des premiers blocs ;
- un moyen de calcul d'agrégation (74) pour calculer une valeur agrégée desdites distorsions calculées ;

un premier moyen de détermination de qualité (75) pour déterminer une première valeur de qualité du signal audio à partir d'une valeur agrégée minimale des distorsions.

**12.** Dispositif selon la revendication 11, dans lequel la qualité indiquée par la première valeur de qualité déterminée est inversement proportionnelle à ladite valeur agrégée minimale des distorsions.

**13.** Dispositif selon l'une quelconque des revendications 11 ou 12, comprenant en outre un moyen pour déterminer une seconde valeur de qualité, le moyen étant **caractérisé par** :

- un second moyen de segmentation pour segmenter le signal de référence (11) et le signal traité (12) en au moins un second bloc, chaque second bloc contenant un nombre prédéterminé des premiers blocs ;
- un second moyen de calcul de paramètres pour calculer un second paramètre à partir de chacun des paramètres spectraux calculés pour chacun des premiers blocs contenus dans les seconds blocs ;
- un second moyen de calcul de distorsion pour calculer une distorsion entre chaque second paramètre du signal de référence et le second paramètre correspondant du signal traité pour chaque bloc, au décalage temporel optimal ;
- un second moyen de détermination de qualité pour déterminer une seconde valeur de qualité à partir d'une valeur agrégée des distorsions calculées.

**14.** Dispositif selon la revendication 13, dans lequel une seconde valeur de qualité déterminée est inversement proportionnelle à la valeur agrégée des distorsions.

**15.** Dispositif selon la revendication 13 ou 14, comprenant en outre un moyen de détermination de qualité pour déterminer une qualité totale du signal audio en associant la première valeur de qualité à la seconde valeur de qualité.

**16.** Dispositif selon l'une quelconque des revendications 13 à 15, dans lequel le calcul des seconds paramètres comprend la détermination de la moyenne, de la variance ou de l'asymétrie des paramètres spectraux calculés pour les premiers blocs contenus dans un second bloc.

**17.** Dispositif selon l'une quelconque des revendications 11 à 16, dans lequel le dispositif est agencé de manière à être connecté à deux points du système de communication, l'un pour l'insertion du signal de référence et l'autre pour la réception du signal traité déformé.

11

Reference
signal

13

$P_n^r(\omega)$

15

$-$

$D_n$

16

Processed
signal

12

$P_n^p(\omega)$

14

PRIOR ART

Fig. 1

PRIOR ART

Audio
Signal

Communication
system — 21

Reference
Signal

Processed
Signal

Time aligning
device — 22

Feature
extracting device — 23

Quality predicting
device — 24

25

Q

Fig. 2

Fig. 3

Audio Signal

Communication
system  ⌐ 21

Reference
Signal

Processed
Signal

Parameter
extracting device  — 23

Time aligning -
+
Quality predicting
device  — 41

— 42

Q

# Fig. 4

Segmenting the signal into first blocks — 51

↓

Calculating e.g. three spectral parameters for each block — 52

↓

Calculating the distortion between each spectral parameter of the two signals — 53

↓

Aggregating the distortions at different time-displacements. — 54

↓

Determining the first quality value from the minimum aggregated distortions — 55

# Fig. 5

Segmenting the signals
into second blocks — 61

Calculating a second parameter from
each of the spectral parameters. — 62

Calculating the distortion between each of
the second parameters in the two signals — 63

Determining a second quality value
from the aggregated distortions. — 64

Fig. 6

Reference
Signal

Processed
Signal

11

12

71 — Signal segmenting
means

72 — Spectral parameter
calculating means

73 — Distortion
calculating means

74 — Aggregation
calculating means

75 — First quality
determining means

42

$Q_1$

# Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BEERENDS J.G et al.** Perceptual Evalution of Speech Quality (PESQ) The New ITV Standard for End-to-End Speech quality assessment Part II. *JAES,* October 2002